# EUROPEAN PATENT SPECIFICATION

(11) **EP 4 418 411 B1**
(45) Date of publication and mention of the grant of the patent: **07.10.2026**
(21) Application number: 23765727.5
(22) Date of filing: 13.02.2023
(51) Int. Cl.: H01M 10/6568, A62C 3/16, H01M 10/625, H01M 10/647, H01M 10/6556, F16L 13/02, F16L 25/00, F16L 39/06, F16L 33/22, F16L 25/14, F16L 43/02, F16L 47/02, H01M 10/613

(54) **THERMAL PROTECTION COMPONENT, BATTERY, AND ELECTRIC APPARATUS**
WÄRMESCHUTZKOMPONENTE, BATTERIE UND ELEKTRISCHE VORRICHTUNG
COMPOSANT DE PROTECTION THERMIQUE, BATTERIE ET APPAREIL ÉLECTRIQUE

(30) Priority: 08.03.2022 CN 202220502179 U
(43) Date of publication of application: 21.08.2024
(73) Proprietor: Contemporary Amperex Technology (Hong Kong) Limited, Central, Central And Western District (HK)
(72) Inventor: ZHOU, Cong, Ningde, Fujian 352100 (CN); HUANG, Xiaoteng, Ningde, Fujian 352100 (CN)
(74) Representative: Ziebig Hengelhaupt Intellectual Property Attorneys Patentanwaltskanzlei PartGmbB
(86) International application number: PCT/CN2023/075645
(87) International publication number: WO 2023/169149

(56) References cited:
- WO-A1-2016/058914
- CN-A- 108 390 132
- CN-A- 111 509 163
- CN-A- 111 509 163
- CN-A- 112 833 267
- CN-A- 113 594 581
- CN-U- 205 013 929
- CN-U- 208 173 678
- CN-U- 217 158 327

## Description

### TECHNICAL FIELD

The present disclosure relates to the field of battery technology, and in particular relates to a thermal protection component, a battery and an electric apparatus.

### BACKGROUND

Battery cells are widely used in electronic devices, such as mobile phones, laptops, battery cars, electric cars, electric airplanes, electric ships, electric toy cars, electric toy ships, electric toy airplanes, electric tools, etc. The battery cells may include cadmium-nickel battery cells, nickel-hydrogen battery cells, lithium-ion battery cells, secondary alkaline zinc-manganese battery cells, etc.

A battery usually includes a plurality of battery cells, and the plurality of battery cells are electrically connected through a bus component. Each battery cell generates heat during operation. Therefore, the heat generated by the plurality of battery cells in the battery is easy to be accumulated, causing the temperature of the battery cells to rise, and sometimes even catching fire. When the operating temperature of the battery cell is generally within the range of 20 degrees to 40 degrees, its charge and discharge performance is the best and its lifespan is the best. It is an urgent technical problem needed to be solved that how to control the operating temperature of the battery cells within a suitable range and perform fire extinguishing and protection when the battery cells catch fire in the battery technology.

A thermal protection component for a battery, of the prior art, is known from CN108390132A or CN112833267A.

### SUMMARY

The invention is a thermal protection component for a battery, according to the technical features of independent claim 1. Advantageous embodiments of the invention are defined in the dependent claims.

Embodiments of the present disclosure provide a thermal protection component, a battery and an electric apparatus, which can improve a heat exchange effect, and perform fire extinguishing and protection when an open fire occurs in a battery cell, so the battery cells can work in a safe environment and at a suitable temperature.

In a first aspect, embodiments of the present disclosure provide a thermal protection component for a battery. The thermal protection includes a pipe and a joint. The pipe is provided with a flow channel for a cooling medium to flow in its interior. The joint is provided with a snap-in member on an inner wall thereof, the snap-in member is provided with a plurality of snap-in ends, an end of the pipe is inserted into the joint, each snap-in end extends to the interior of the pipe, and part of a pipe wall of the pipe is inserted between the snap-in ends and the inner wall of the joint.

In the above solution, the cooling medium flows in the flow channel to exchange heat with battery cells through the pipe, so the battery cells work at a suitable temperature. At the same time, when an open flame occurs in the battery cells, the pipe can be fused and the cooling medium in its interior is sprayed at a fire point of the battery cells for fire extinguishing and protection, so the battery cells can work in a safe environment. In the embodiments, the snap-in member is provided on the inner wall of the joint, the part of the pipe wall of the pipe is inserted between the snap-in ends of the snap-in member and the inner wall of the joint, thereby effectively supporting the end of the pipe; at the same time, because the pipe wall is only partially inserted between the snap-in end and the inner wall of the joint, the snap-in end only occupies a small part of the space in the joint and the pipe, a flow area in the interior of the heat protection component can be effectively ensured to ensure a heat exchange efficiency of the thermal protection component and a flow rate of the cooling medium during fire extinguishing and protection.

According to the invention, the snap-in member includes a plurality of claws arranged to be spaced apart along a periphery direction of the joint, one end of each claw is connected to the inner wall of the joint, and the other end of each claw protrudes from the inner wall of the joint to form the snap-in end.

In the above solution, the snap-in member includes a plurality of claws, and each claw protrudes from the end of the inner wall of the joint to form a gap for the pipe wall of the pipe to be inserted together with the inner wall of the joint. The plurality of claws cooperate together to position and support the pipe wall of the pipe at multiple points, and to reduce the occurrence of pressure deformation at the end of the pipe when the interior of the pipe body is pressurized.

According to the invention, the joint has a first end and a second end, a step surface is formed on the inner wall of the joint toward the first end, the first end of the joint is open, the end of the pipe is inserted into the interior of the joint from the first end of the joint, and an end surface of the end of the pipe abuts against the step surface.

In the above solution, the step surface is provided on the inner wall of the joint, and thus the end of the pipe abuts with the step surface, which can not only limit a depth of the pipe inserted into the joint in an axial direction, but also reduce an impact of a large depth of the pipe inserted into the joint on a flow area in the interior of the joint; at the same time, the step surface can also protect the end of the pipe and reduce erosion and wear of the end of the pipe during a fluid flow process.

In some embodiments, one end of each claw is connected to the inner wall of the joint between the step surface and the second end, the other end of each claw protrudes from the step surface to form the snap-in end, and the snap-in end corresponds to the inner wall of the joint between the step surface and the first end.

In the above solution, the other end of the claw protrudes from the step surface to form the snap-in end. When the pipe is inserted into the interior of the joint, part of the pipe wall of the pipe is placed between the snap-in end, the step surface and the inner wall of the joint. The step surface provides an installation platform for the claws, and the claws only need to be provided in a strip shape, to reduce the difficulty of processing and installation of the claws.

According to the invention, a plurality of bumps are spaced on the step surface.

In the above solution, the end surface of the end of the pipe may become uneven during the processing. Since the pipe is a flexible pipe, when the end surface of the end of the pipe abuts the step surface, a recessed part and the bump abut with each other, and a protruding position can be placed in an area between two adjacent bumps through deformation, thereby reducing the problem of tilting fitting with the joint due to the uneven end surface of the pipe end.

In some embodiments, one of the bumps is provided on the step surface at a position between each claw and the inner wall of the joint.

In the above solution, through the cooperation of the claws and the inner wall of the joint, when the pipe is deformed due to the uneven end surface of the pipe in a case of abutting on the step surface, a radial deformation of the pipe is limited to ensure a flow area in the interior of the pipe.

In some embodiments, the pipe is configured as a flat pipe.

In the above solution, the pipe is configured as the flat pipe to improve a structural strength and bending resistance of the pipe.

In some embodiments, at least one reinforcing rib is provided in the interior of the pipe and extends along an axial direction of the pipe, the interior of the pipe is separated by the reinforcing rib to form at least two flow channels arranged to be spaced apart along a radial direction of the pipe.

In the above solution, the reinforcing rib arranged in the interior of the pipe can further improve the structural strength of the pipe and reduce the occurrence of deformation of the pipe caused by surface concavity or changes in internal pressure of the pipe during the insertion process of the pipe and the joint.

In some embodiments, the pipe is configured as a flexible pipe.

In the above solution, the pipe is configured as the flexible pipe to improve the flexibility of the installation and cooperation between the pipe and the battery.

In some embodiments, the pipe is made of plastic material.

In the above solution, the pipe made of plastic material is conducive to be rapid fused when burned.

In some embodiments, an interference fit is provided between the pipe and the joint.

In the above solution, by inserting the pipe into the interior of the joint in a way of an interference fit, the connection reliability and sealing performance between the pipe and the joint can be improved, and a possibility of a gap in the connection between the components caused by a relative movement therebetween can be reduced to improve sealing performance of the thermal protection component.

In some embodiments, the pipe and the joint are laser welded and fixed.

In the above solution, after the pipe and the joint are connected in a way of an interference fit, an outer wall of the pipe and the inner wall of the joint are welded to further improve the connection strength and sealing performance therebetween.

In some embodiments, the joint is provided with at least one connecting portion communicated with an interior of the joint at the second end of the joint, or communicated with an interior of the joint at a side wall of the joint between the first end and the second end.

In the above solution, the connecting portion is used to be connected with other pipelines to realize a practical application of the thermal protection component.

In a second aspect, embodiments of the present disclosure provide a battery including the thermal protection component of any one of the embodiments in the first aspect. The thermal protection component is disposed above the battery cell. The thermal protection component is used to adjust a temperature of the battery cell and to be fused so the cooling medium is sprayed at the fire point when there is an open flame in the battery cell.

In the above solution, the cooling medium flows in the flow channel of the thermal protection component to exchange heat with battery cells through the pipe, so the battery cells work at a suitable temperature. When an open flame occurs in the battery cells, the pipe can be burned and fused, and the cooling medium in its interior is sprayed at the fire point of the battery cells for fire extinguishing and protection, to improve a use safety of the battery.

In a third aspect, embodiments of the present disclosure provide an electric apparatus including the battery in the second aspect for supplying electrical energy.

In the above solution, the cooling medium flows in the flow channel of the thermal protection component to exchange heat with battery cells through the pipe, so the battery cells work at a suitable temperature. At the same time, when an open flame occurs in the battery cells, the pipe of the thermal protection component can be burned and fused and the cooling medium in its interior is sprayed at a fire point of the battery cells for fire extinguishing and protection, to improve a use safety of the battery and the electric apparatus.

### BRIEF DESCRIPTION OF THE DRAWINGS

In order to more clearly illustrate technical solutions of embodiments of the present disclosure, drawings required to be used in the embodiments of the present disclosure will be briefly introduced below. Obviously, the drawings described below are only some embodiments of the present disclosure, and those skilled in the art can also obtain other drawings based on the drawings without creative efforts.
FIG. 1 is a schematic structural diagram of a vehicle provided by some embodiments of the present disclosure;
FIG. 2 is an exploded schematic diagram of a battery provided by some embodiments of the present disclosure;
FIG. 3 is a schematic structural diagram of a battery module provided by other embodiments of the present disclosure;
FIG. 4 is a schematic structural diagram of a thermal protection component provided by some embodiments of the present disclosure;
FIG. 5 is an exploded schematic diagram of the thermal protection component shown in FIG. 4;
FIG. 6 is a schematic cross-sectional view of the thermal protection component shown in FIG. 4;
FIG. 7 is a schematic structural diagram of a joint of the thermal protection component shown in Figure 4;
Figure 8 is a schematic cross-sectional view of the joint of the thermal protection component shown in FIG. 4;
FIG. 9 is a schematic structural view of a pipe of the thermal protection component shown in
FIG. 4.

In drawings, the figures are not drawn to actual scale.

### Description of reference signs:

1. Vehicle; 2. Battery; 21. Battery unit; 211. Battery cell; 22. Box; 221. First box part; 222. Second box part; 223. Accommodation space; 23. Thermal protection component; 231. Pipe; 2311. Reinforcing rib; 2312. Flow channel; 232. Joint; 2321. First end; 2322. Second end; 2323. Step surface; 2324. Claw; 2325. Bump; 2326. Connecting portion 3. Controller; 4. Motor; 5. Battery module.

### DETAILED DESCRIPTION

In order to make purposes, technical solutions and advantages of embodiments of the present disclosure more clear, the technical solutions in embodiments of the present disclosure will be described clearly and completely in combination with drawings attached to embodiments of the present disclosure. Obviously, embodiments described are part, and not all of embodiments of the present disclosure. Based on embodiments in the present disclosure, all other embodiments obtained by those skilled in the field without creative work shall fall within the scope of protection in the present disclosure.

Unless otherwise defined, all technical and scientific terms used in the present disclosure have the same meaning as those normally understood by skilled in the art. In the present disclosure, terms used in the description of the present disclosure are for purposes of describing specific embodiments only and are not intended to restrict the present disclosure Terms "including" and "having" and any variation thereof in the description, claims and the above drawings of the present disclosure are intended to cover non-exclusive inclusion. Terms "first", "second", etc. in the description and claims or in the above drawings of the present disclosure are used to distinguish between different objects and are not used to describe a particular order or primary or secondary relationship.

Reference to "embodiments" in the present disclosure means that a particular feature, structure or characteristic described in conjunction with embodiments may be included in at least one embodiment of the present disclosure. The presence of the phrase at various points in the specification does not necessarily refer to the same embodiment, nor is it a separate or alternative embodiment that is mutually exclusive with other embodiments.

In the description of the present disclosure, it should be noted that, unless otherwise stated or defined, terms "installation", "connected to", "connected with", "attachment" and the like are to be understood broadly, and may be, for example, a fixed connection, a detachable connection, or an integral connection; they can be connected directly or indirectly through an intermediate medium or an internal communication between two elements. The specific meaning of the above terms in the present disclosure can be understood by those skilled in the art according to actual circumstance.

The term "and/or" in the present disclosure is only an association relationship describing associated objects, indicating that there can be three kinds of relationships, for example, A and/or B, can mean: there is A alone, there is A and B simultaneously, and there is B alone. In addition, the character "/" in the present disclosure generally indicates that the associated objects are in an "or" relationship.

In embodiments of the present disclosure, the same reference sign represents the same parts, and for brevity, a detailed description of the same part is omitted in different embodiments. It is understood that the thickness, length, width, etc. of various components in embodiments of the present disclosure as illustrated and the overall thickness, length, width, etc. of an integrated device are illustrative only and should not constitute any limitation to the present disclosure.

The term "a plurality of" as used in the present disclosure means more than two (including two).

In the present disclosure, a battery cell may include a lithium ion secondary battery cell, a lithium ion primary battery cell, a lithium sulfur battery cell, a sodium lithium ion battery cell, a sodium ion battery cell or a magnesium ion battery cells, etc., and the embodiments of the present disclosure are not limited to this. The battery cell may be in the shape of a cylinder, a flat body, a rectangular parallelepiped or other shapes, and the embodiments of the present disclosure are not limited to this. Battery cells are generally divided into three types according to packaging methods: cylindrical battery cells, square battery cells and soft-pack battery cells, and the embodiments of the present disclosure are not limited to this.

The battery referred to in embodiments of the present disclosure is a single physical module including one or multiple battery cells to provide higher voltage and capacity. The battery may generally include a box for encapsulating one or more battery cells. The box can prevent liquids or other foreign objects from affecting charging or discharging of the battery cell.

The battery cell includes an electrode assembly and an electrolyte. The electrode assembly includes a positive electrode sheet, a negative electrode sheet and a separator. The battery cell works mainly by moving metal ions between the positive electrode sheet and the negative electrode sheet. The positive electrode sheet includes a positive current collector and a positive active substance layer which is applied on the surface of the positive current collector. The positive current collector fluid includes a positive current collector part and a positive tab protruding from the positive current collector part. The positive current collector part is coated with the positive active substance layer, and at least part of the positive tab is not coated with the positive active substance layer. Taking the lithium-ion battery as an example, the material of the positive current collector can be aluminum, the positive active substance layer includes the positive active material, which can be lithium cobaltate, lithium iron phosphate, lithium ternary or lithium manganate, etc. The negative electrode sheet includes a negative current collector and a negative active substance layer which is applied on the surface of the negative current collector. The negative current collector includes a negative current collector part and a negative tab protruding from the negative current collector part. The negative current collector part is coated with the negative active substance layer, and the negative tab is not coated with the negative active substance layer. In order to ensure that large currents can pass through without melting, multiple positive tabs are provided and stacked together, and multiple negative tabs are provided and stacked together. The material of the negative current collector can be copper, and the negative active substance layer includes the negative active material which may be carbon or silicon. The material of a separator can be polypropylene (PP) or PE (polyethylene). In addition, the electrode assembly may have a rolled structure or a stacked structure, and the embodiments of the present disclosure are not limited thereto.

Battery cells will generate heat during charging and discharging processes. When multiple battery cells are used in groups, heat may be accumulated. If the heat is not effectively removed, it will cause the battery cells to heat up and accelerate the aging of the battery cell. In addition, a high temperature can easily cause thermal runaway, causing safety risks. When the battery cells are in an environment of a low temperature, their service life will be shortened and discharge capacity will be weakened.

The inventors tried to install a thermal protection component in the battery to control the operating temperature of the battery cells within an appropriate range. Specifically, a flow channel is usually provided in the interior of the thermal protection component. When an external cooling medium flows through the flow channel of the thermal protection component, the cooling medium exchanges heat with the battery cells through the thermal protection component to adjust the temperature of the battery cells. However, the inventors found that when the pipe of the thermal protection component is connected to a joint, in order to prevent the end of the pipe from deforming, a support member needs to be provided in the interior of the joint. During installation, part of the support member is at first inserted into the pipe, the pipe is wrapped on the support member, and then the support member and the end of the pipe are installed in the joint. Although this arrangement can reduce the deformation of the end of the pipe, the support member provided occupies large internal space of the pipe, which affects the overall flow area of the thermal protection component, resulting in lower heat exchange efficiency of the thermal protection component. At the same time, during use, the inventors also found that when the interior of the pipe body is pressurized, the pipe will easily deform.

At the same time, the inventors also found that although the thermal protection component can control the temperature of the battery cells through heat exchange in most cases, in some special cases, the temperature of the battery cells may rise rapidly, the heat exchange is too late and a fire occurs. For this situation, there is currently no effective apparatus or method to quickly extinguish the fire of the battery cells, and it can only be handled manually after the user discovers the fire. The situation may be failed to be handled in time, thereby leading to further expansion of the fire.

In view of this, embodiments of the present disclosure provide a thermal protection component for a battery. The thermal protection includes a pipe and a joint. The pipe is provided with a flow channel for a cooling medium to flow in its interior. The joint is provided with a snap-in member on an inner wall thereof, the snap-in member is provided with a plurality of snap-in ends, an end of the pipe is inserted into the joint, each snap-in end extends to the interior of the pipe, and part of a pipe wall of the pipe is inserted between the snap-in ends and the inner wall of the joint. The thermal protection component provided by the embodiments of the present disclosure can adjust the temperature of the battery cells, and ensure the flow area in the interior of the thermal protection component on the premise of being able to support and hold the end of the pipe, thereby ensuring the heat exchange effect of the thermal protection component. At the same time, in the thermal protection component provided by the embodiments of the present disclosure, the pipe can be burned and fused when an open fire occurs in the battery, and the cooling medium in its interior is sprayed at the fire point to extinguish fire for the battery and improve the safety of the battery.

The thermal protection component described in the embodiments of the present disclosure is suitable for batteries and electric apparatus using batteries.

Electric apparatus can be vehicles, mobile phones, portable devices, laptops, ships, spacecraft, electric toys and power tools, etc. The vehicles can be fuel vehicles, gas vehicles or new energy vehicles, and new energy vehicles can be pure electric vehicles, hybrid vehicles or extended-range vehicles, etc. The spacecraft include aircraft, rockets, space shuttles, spaceships, etc. The electric toys include fixed or mobile electric toys, such as game consoles, electric car toys, electric ship toys and electric airplane toys, etc. The electric tools include metal cutting electric tools, grinding electric tools, assembly electric tools and railway electric tools, for example, electric drills, electric grinders, electric wrenches, electric screwdrivers, electric hammers, impact drills, concrete vibrators, planers, etc. The embodiments of the present disclosure impose no special restrictions on the above-mentioned electrical apparatus.

For convenience of explanation, the following embodiments take the electrical apparatus as a vehicle as an example.

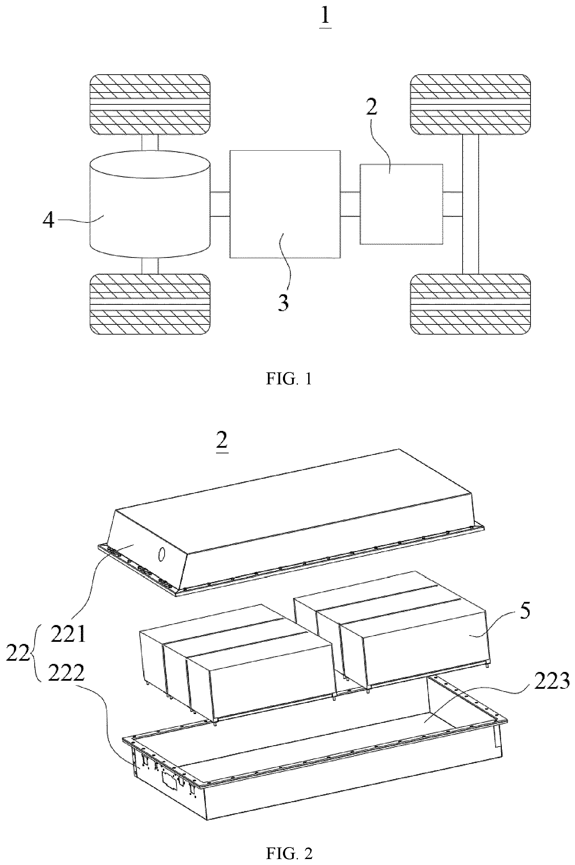

FIG. 1 is a structural diagram of a vehicle provided by some embodiments of the present disclosure.

As shown in FIG. 1, a battery 2 is provided in the interior of a vehicle 1, and can be arranged in the bottom or in the head or back of the vehicle 1. The battery 2 can be used to provide electricity to the vehicle 1, for example, the battery 2 can be used as an operating power source for the vehicle 1.

The vehicle 1 may also include a controller 3 and a motor 4. The controller 3 is used to control the battery 2 to provide electricity to the motor 4, for example, for electricity requirements for the starting, navigation and driving of the vehicle 1.

In some embodiments of the present disclosure, the battery 2 may be used not only as an operating power source for the vehicle 1, but also as a driving power source for the vehicle 1, providing driving power to the vehicle 1 in place or in part in place of fuel or natural gas. FIG. 2 is an exploded diagram of a battery provided by some embodiments of the present disclosure.

As shown in FIG. 2, the battery 2 includes a box 22 and battery cells 211 (not shown in FIG. 2) housed in the box 5.

The box 5 is used to house the battery cells 211 and can be of a variety of structures. In some embodiments, the box 5 may include a first box part 221 and a second box part 222 that are mutually covered. The first box part 221 and the second box part 222 jointly define accommodation space 223 for accommodating the battery cells 211. The second box part 222 can have a hollow structure with an opening at one end, the first box part 221 can have a plate structure, and the first box part 221 covers and encloses an opening side of the second box part 222 to form the box 33 with the accommodating space 223. Both the first box part 221 and the second box part 222 may have a hollow structure with an opening at one side. An opening side of the first box part 221 covers and encloses an opening side of the second box part 222 to form the box 22 with the accommodating space 223. Of course, the first box part 221 and the second box part 222 can be in a variety of shapes, such as cylinders, cuboids, etc. In order to improve the tightness of the first box part 221 and the second box part 222 that have been connected, sealing parts, such as sealant and sealing rings, can also be arranged between the first box part 221 and the second box part 222.

In a case that the first box part 221 covers and encloses the top of the second box part 222, the first box part 221 may also be called an upper box cover, and the second box part 222 may also be called a lower box 22.

In the battery 2, a plurality of battery cells can be provided. The plurality of battery cells 211 can be in a series connection, a parallel connection, or a mixed connection. The mixed connection means that the plurality of battery cells 211 are connected in series and parallel. The plurality of battery cells 211 can be directly in a series connection, a parallel connection, or a mixed connection, and then the entirety composed of the plurality of battery cells 211 is accommodated in the box 22. Of course, the plurality of battery cells 211 can be in a series connection, a parallel connection, or a mixed connection to form a battery module 5 at first, and then, a plurality of battery modules 5 can be in a series connection, a parallel connection, or a mixed connection to form the entirety, and accommodated in the box 22.

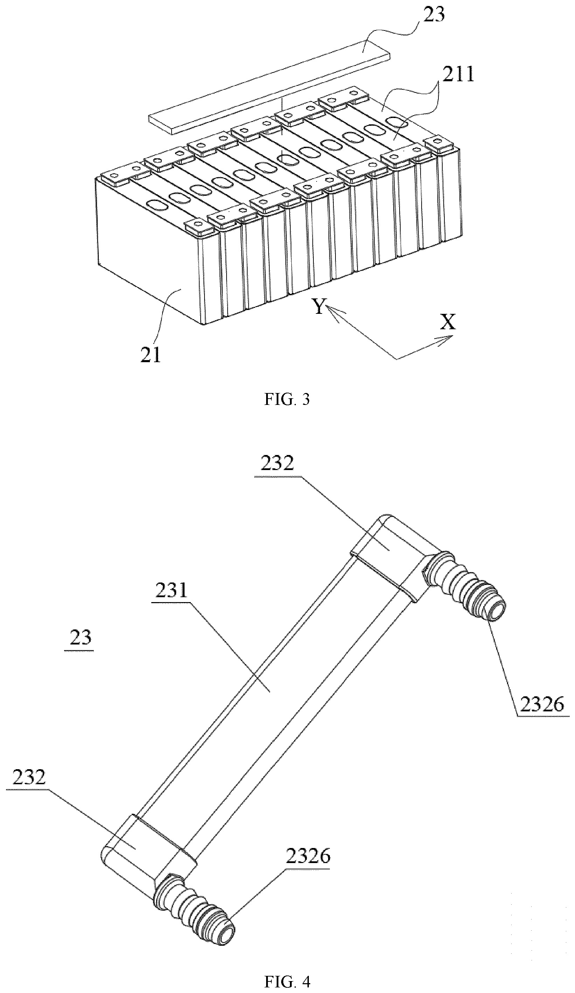

FIG. 3 is a schematic structural diagram of a battery module provided by other embodiments of the present disclosure.

As shown in FIG. 3, in some embodiments, the battery 2 includes a battery unit 21, and the battery unit 21 includes a plurality of battery cells 211 sequentially arranged along an arrangement direction X.

One or multiple battery units 21 may be provided. For example, the battery 2 includes a plurality of battery cells 21 arranged along a first direction Y that intersects the arrangement direction X. Optionally, the first direction Y is perpendicular to the arrangement direction X.

The plurality of battery cells 211 in the battery 2 can be electrically connected through a bus component to realize parallel, series or mixed connection of the multiple battery cells 211 in the battery 2.

In some embodiments, the battery 2 further includes a thermal protection component 23. The thermal protection component 23 is disposed above the battery cells 211. The thermal protection component 23 is used to adjust the temperature of the battery cells 211 so the battery cells 211 operate at a suitable temperature. At the same time, the thermal protection component 23 is also used to burned and fused when an open flame occurs in the battery cells, and the cooling medium in the interior of the pipe 231 of the thermal protection component 23 is sprayed at a fire point of the battery cells 211 for fire extinguishing and protection of the battery cells, to ensure a use safety of the battery 2 and the electric apparatus.

The thermal protection component of the embodiments of the present disclosure will be described in detail below with reference to the accompanying drawings.

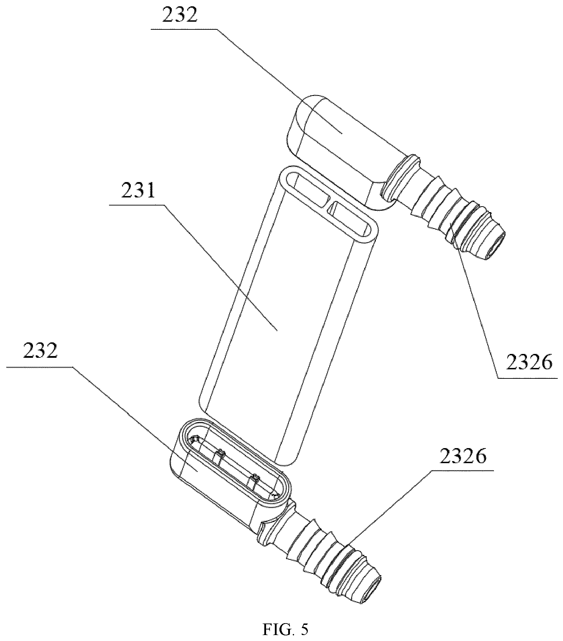

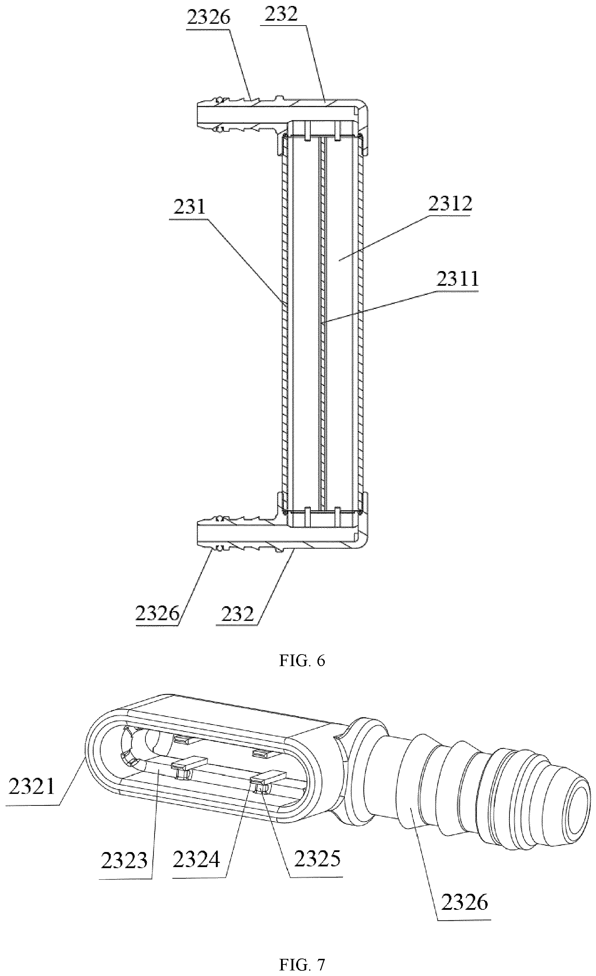

FIG. 4 is a schematic structural view of a thermal protection component provided by some embodiments of the present disclosure. FIG. 5 is an exploded schematic diagram of the thermal protection component shown in FIG. 4. FIG. 6 is a schematic cross-sectional view of the thermal protection component shown in FIG. 4.

As shown in FIGS. 4 to 6, the thermal protection component 23 of the embodiments of the present disclosure is used in the battery 2. The thermal protection component 23 includes: a pipe 231 provided with a flow channel 2312 for the cooling medium to flow in its interior; a joint 232. A snap-in member is provided on an inner wall of the joint 232, and is provided with a plurality of snap-in ends. An end of the pipe 231 is inserted into the joint 232, and each snap-in end extends into the interior of the pipe 231. Part of a pipe wall of the pipe 231 is inserted between the snap-in ends and the inner wall of the joint 232.

The pipe 231 can be provided on a side or top of the battery 2 to adjust the temperature of the battery cells 211. The flow channel 2312 is used to be communicated with an external liquid supply pipeline, and the cooling medium circularly flows between the flow channel 2312 and the external liquid supply pipeline, to exchange heat with the battery cells 211 through the pipe 231, thereby allowing the battery cells 211 to operate at a suitable temperature. The cooling medium can be liquid.

Two joints 232 are usually provided. The two joints 232 are respectively connected to two ends of the pipe 231, and both ends of the pipe 231 are connected to the external liquid supply pipeline through the joints 232.

The snap-in member can be bent or otherwise connected to the inner wall of the joint 232, and can also be formed with the snap-in end at a certain distance from the inner wall of the joint 232 for insertion of part of the pipe wall of the pipe 231. The snap-in member is fixed on the inner wall of the joint 232 by welding, bonding or other means, and the present disclosure is not limited thereto.

In the embodiments of the present disclosure, the cooling medium flows in the flow channel 2312 to exchange heat with the battery cells 211 through the pipe 231, so the battery cells 211 operate at a suitable temperature. In the embodiments, the snap-in member is provided on the inner wall of the joint 232, so part of the pipe wall of the pipe 231 is inserted between the snap-in ends of the snap-in member and the inner wall of the joint 232. Therefore, the end of the pipe 231 is effectively supported. At the same time, because the pipe wall is only partially inserted between the snap-in ends and the inner wall of the joint 232, the snap-in ends only occupy a small part of the space in the joint 232 and the pipe 231, thereby effectively ensuring the flow area in the interior of the thermal protection component 23 and ensuring the heat exchange efficiency of the thermal protection component 23.

In addition, in the embodiments of the present disclosure, when the battery cells 211 catches fire and an open flame occurs, the pipe 231 can be burned and fused, and the cooling medium in the interior the pipe 231 can be sprayed at the fire point of the battery cells 211 to extinguish the fire to ensure the safety of the battery 2 and electric apparatus.

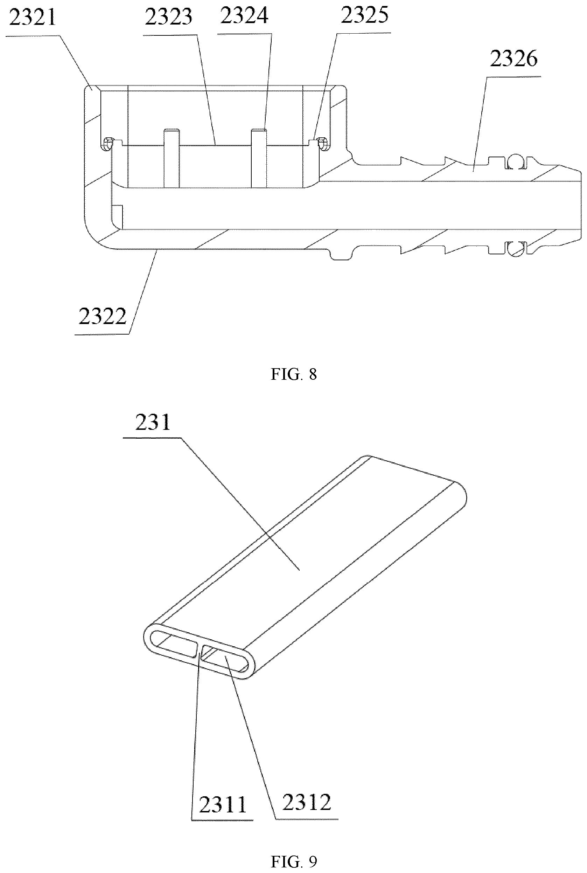

FIG. 7 is a schematic structural view of the joint of the thermal protection component shown in FIG. 4. FIG. 8 is a schematic cross-sectional view of the joint of the thermal protection component shown in FIG. 4.

As shown in FIGS. 7 and 8, according to the invention, the snap-in member includes a plurality of claws 2324. The plurality of claws 2324 are spaced apart along the periphery of the joint 232. One end of each claw 2324 is connected to the inner wall of the joint 232, and the other end of each claw 2324 protrudes from the inner wall of the joint 232 to form the snap-in end.

The specific structure of each claw 2324 is roughly strip-shaped. One end of the claw 2324 is fixed on the inner wall of the joint 232 by welding, bonding or other connection methods. A gap is formed between the other end of the claw 2324 and the inner wall of the joint 232 to allow for an insertion of part of the pipe wall of the pipe 231.

In the embodiments, the plurality of claws 2324 work together to position and support the pipe wall of the pipe 231 at multiple points. When the interior of the pipe body 231 is pressurized, the situation of the pressure deformation at the end of the pipe 231 can be reduced.

As shown in FIGS. 7 and 8, according to the invention, the joint 232 has a first end 2321 and a second end 2322, and a step surface 2323 is formed on the inner wall of the joint 232 toward the first end 2321. The first end 2321 of the joint 232 is open. The end of the pipe 231 is inserted into the interior of the joint 232 from the first end 2321 of the joint 232, and the end surface of the end of the pipe 231 abuts against the step surface 2323.

The joint 232 is of an interior hollow structure with an open first end 2321 and a closed second end 2322. A cavity is formed in the interior of the joint 232. Along a direction from the first end 2321 to the second end 2322, the step surface 2323 is formed on the inner wall of the joint 232 toward the first end 2321 by enlarging an internal size between the first end 2321 and the second end 2322.

In the embodiments, by the step surface 2323 provided on the inner wall of the joint 232, the end of the pipe 231 abuts against the step surface 2323, so the depth of the pipe 231 inserted into the joint 232 can be limited in an axial direction, and the situation that a large depth of the pipe 231 inserted into the joint 232 affects the internal flow area of the joint 232 can be reduced; at the same time, the step surface 2323 can also protect the end of the pipe 231 and reduce the erosion and wear of the end of the pipe 231 during the fluid flow process.

As shown in FIGS. 7 and 8, in some embodiments, one end of each claw 2324 is connected to the inner wall of the joint 232 between the step surface 2323 and the second end 2322, the other end of each claw 2324 protrudes from the step surface 2323 to form the snap-in end, and the snap-in end corresponds to the inner wall of the joint 232 between the step surface 2323 and the first end 2321.

Due to the step surface 2323 provided, the claw 2324 can adopt a straight strip structure, and during installation, its end can be directly fixed on the inner wall of the joint 232 between the step surface 2323 and the second end 2322. The width of the step surface 2323 is the size of the gap between the snap-in end and the inner wall of the joint 232.

In the embodiments, the other end of the claw 2324 protrudes from the step surface 2323 to form the snap-in end. When the pipe 231 is inserted into the joint 232, part of the pipe wall of the pipe 231 is placed between the snap-in end, the step surface 2323 and the inner wall of the joint 232, and the step surface 2323 provides an installation platform for the claw 2324. The claw 2324 only needs to be set in a strip shape, which reduces the processing and installation difficulty of the claw 2324.

The width of the step surface 2323 can be set to be slightly smaller than the thickness of the pipe wall of the pipe 231 during setting, so part of the pipe wall of the pipe 231 is clamped between the snap-in end and the inner wall of the joint 232 in an interference fit manner, to further improve the reliability of the connection between the pipe 231 and the joint 232.

As shown in FIGS. 7 and 8, according to the invention, a plurality of bumps 2325 are spaced on the step surface 2323.

Each bump 2325 is integrally formed on the step surface 2323. The bump 2325 can be a rectangular or hemispherical bump structure, and the hemispherical bump structure can increase the contact area between the bump 2325 and the end surface of the end of the pipe 231 to reduce gaps occurred when the end surface of the end of the pipe 231 abuts against the bump 2325, which affects the sealing between the pipe 231 and the joint 232. At the same time, when the end surface of the end of the pipe 231 abuts against the bump 2325, the hemispherical bump structure can reduce wear on the end surface of the end of the pipe 231 to the greatest extent.

In the embodiments, the end surface of the end of the pipe 231 may be uneven during the processing. Since the pipe 231 is a flexible tube, when the end surface of the end of the pipe 231 abuts against the step surface 2323, a recessed part and the bump 2325 abut with each other, and a protruding position can be placed in an area between two adjacent bumps 2325 through deformation, thereby reducing the problem of tilting fitting with the joint 232 due to the uneven end surface of the end of the pipe 231.

As shown in FIGS. 7 and 8, in some embodiments, one bump 2325 is provided on the step surface 2323 at a position between each claw 2324 and the inner wall of the joint 232.

At the same time, several bumps 2325 can also be selectively provided at other positions on the step surface 2323 that do not correspond to the claws 2324, and the present disclosure is not limited to this.

In the embodiments, through the cooperation of the claws 2324 and the inner wall of the joint 232, when the pipe 231 abuts against the step surface 2323 and deforms due to the uneven end surface, the radial deformation of the pipe 231 is limited, ensuring the flow area in the interior of the pipe 231.

As shown in FIGS. 7 and 8, in some embodiments, the joint 232 has at least one connecting portion 2326, and the connecting portion 2326 is connected to the interior of the joint 232 at the second end 2322 of the joint 232, or the connecting portion 2326 is connected to the second end 2322 is connected to the interior of the joint 232 at a side wall of the joint 232 located between the first end 2321 and the second end 2322.

The connecting portion 2326 is of an interior hollow tubular structure, and the interior of the connecting portion 2326 is communicated with the interior of the joint 232.

In the embodiments, the connecting portion 2326 is used to connect with the external liquid supply pipeline to realize the practical application of the thermal protection component 23.

FIG. 9 is a schematic structural view of the pipe of the thermal protection component shown in FIG. 4.

As shown in FIG. 9, in some embodiments, the pipe 231 is a flat pipe.

It should be noted that the pipe 231 may also be a circular pipe or a pipe with other shapes in radial cross section.

In the embodiments, the pipe 231 is made into a flat pipe, which can improve the structural strength and bending resistance of the pipe 231.

As shown in FIG. 9, in some embodiments, at least one reinforcing rib 2311 is provided in the interior of the pipe 231. The reinforcing rib 2311 extends along the axial direction of the pipe 231. The interior of the pipe 231 is separated by the reinforcing rib 2311 to form at least two flow channels 2312 arranged to be spaced apart along the radial direction of the pipe 231. When arranging the reinforcing rib 2311, it is preferable to adjust the position of the reinforcing rib 2311 to set the flow areas of the flow channels 2312 separated by the reinforcing rib 2311 to be approximately the same, so each part is stressed as even as possible when the interior of the pipe 231 is pressurized.

In the embodiments, the reinforcing rib 2311 provided in the interior of the pipe 231 can further improve the structural strength of the pipe 231 and reduce the risk of the deformation of the pipe 231 due to surface concavity or internal pressure changes in the pipe 231 during the insertion process of the pipe 231 and the joint 232.

In some embodiments, the pipe 231 is a flexible pipe.

It should be noted that the pipe 231 may also be a rigid pipe.

In the embodiments, the pipe 231 is made into a flexible tube, which can improve the flexibility of installation and cooperation between the pipe 231 and the battery 2.

In some embodiments, the pipe 231 is made of plastic material.

The pipe 231 can also be made of other materials that are easy to be fused after being burned. In the embodiments, the pipe 231 made of plastic material is conducive to be burned and quickly fused, and the cooling medium in the interior of the pipe 231 can be sprayed out in time to extinguish the fire.

In some embodiments, the pipe 231 and the joint 232 is in an interference fit.

The outer diameter of the pipe 231 is slightly larger than the inner diameter of the joint 232, and the pipe 231 is tightly inserted into the joint 232.

In the embodiments, by inserting the pipe 231 into the interior of the joint 232 in an interference fit manner, the connection reliability and sealing performance between the pipe 231 and the joint 232 can be improved, and the occurrence of the gap at the connection position due to a relative movement therebetween can be reduced to improve the sealing performance of the thermal protection component 23.

In some embodiments, the pipe 231 and the joint 232 are laser welded and fixed.

In the above solution, after the pipe 231 and the joint 232 are connected in an interference fit, the outer wall of the pipe 231 and the inner wall of the joint 232 are welded, which can further improve the connection strength and sealing performance therebetween.

In some embodiments, the present disclosure also provides a battery. The battery includes the thermal protection component described in any of the above solutions and the battery cells. The thermal protection component is used to adjust the temperature of the battery cells. The thermal protection component is also used to be burned and fused and the cooling medium in its interior is sprayed at the fire point to extinguish the fire when the battery cells catch fire and an open flame occurs.

In the above solution, the cooling medium flows in the flow channel of the thermal protection component to exchange heat with the battery cells through the pipe, so the battery cells operate at a suitable temperature. At the same time, when the battery cells catch fire and an open flame occurs, the pipe is burned and fused and the cooling medium in its interior is sprayed at the fire point to extinguish the fire and ensure the safety of the battery.

In some embodiments, the present disclosure also provides an electric apparatus. The electric apparatus includes the battery described in any of the above solutions, and the battery is used to provide electrical energy.

In the above solution, the cooling medium flows in the flow channel of the thermal protection component to exchange heat with battery cells through the pipe, so the battery cells operate at a suitable temperature. At the same time, when an open flame occurs in the battery cells, the pipe of the thermal protection component can be burned and fused and the cooling medium in its interior is sprayed at the fire point to extinguish the fire, to ensure the safety of the battery and the electric apparatus.

The electric apparatus can be any of the aforementioned devices or systems that use batteries. In some embodiments, referring to FIGS. 4 to 9, the present disclosure provides the thermal protection component, including the pipe 231 and two joints 232. The interior of the pipe 231 is provided with the reinforcing rib 2311, and the interior of each of the two joints 232 is provided with the snap-in member for supporting and connecting the end of the pipe 231. The snap-in member includes the plurality of claws 2324, and each claw 2324 is formed with the snap-in end to cooperate with the inner wall of the joint 232 to clamp part of the pipe wall of the end of the pipe 231. The pipe 231 and the two joints 232 are in an interference fit, and the pipe 231 and the two joints 232 are also fixed by laser welding. In this way, the snap-in member can effectively support the end of the pipe 231, and the snap-in member has a compact structure, which can minimize the impact on the overall flow area of the thermal protection component and ensure the heat exchange efficiency of the thermal protection component. In addition, in conjunction with the reinforcing rib in the interior of the pipe 231, the deformation of the pipe 231 can be reduced when the internal pressure of the pipe 231 changes. At the same time, the thermal protection component 23 is provided above the battery cells, and during the heat exchange process of the thermal protection component 23 with the battery cells, when the battery cells catch fire and an open flame occurs, the pipe 231 of the thermal protection component 23 can be burned and fused, so the cooling medium in its interior is sprayed at the fire point of the battery cells to extinguish the fire to ensure the safety of the battery.

## Claims

1. A thermal protection component (23) for a battery (2), comprising:
a pipe (231) provided with a flow channel (2312) for a cooling medium to flow in its interior; and
a joint (232) provided with a snap-in member on an inner wall thereof, wherein the snap-in member is provided with a plurality of snap-in ends, an end of the pipe (231) is inserted into the joint (232), each snap-in end extends to the interior of the pipe (231), and part of a pipe wall of the pipe (231) is inserted between the snap-in ends and the inner wall of the joint (232);
wherein the snap-in member comprises a plurality of claws (2324) arranged to be spaced apart along a periphery direction of the joint (232), one end of each claw (2324) is connected to the inner wall of the joint (232), and the other end of each claw (2324) protrudes from the inner wall of the joint (232) to form the snap-in end; wherein the joint (232) has a first end (2321) and a second end (2322), a step surface (2323) is formed on the inner wall of the joint (232) toward the first end (2321), the first end (2321) of the joint (232) is open, the end of the pipe (231) is inserted into an interior of the joint (232) from the first end (2321) of the joint (232), and an end surface of the end of the pipe (231) abuts against the step surface (2323);
wherein a plurality of bumps (2325) are spaced on the step surface (2323).

2. The thermal protection component (23) according to claim 1, wherein one end of each claw (2324) is connected to the inner wall of the joint (232) between the step surface (2323) and the second end (2322), the other end of each claw (2324) protrudes from the step surface (2323) to form the snap-in end, and the snap-in end corresponds to the inner wall of the joint (232) between the step surface (2323) and the first end (2321).

3. The thermal protection component (23) according to claim 1, wherein one of the bumps (2325) is provided on the step surface (2323) at a position between each claw (2324) and the inner wall of the joint (232).

4. The thermal protection component (23) according to claim 1, wherein the joint (232) is provided with at least one connecting portion (2326) communicated with the interior of the joint (232) at the second end (2322) of the joint (232), or communicated with the interior of the joint (232) at a side wall of the joint (232) between the first end (2321) and the second end (2322).

5. The thermal protection component (23) according to any one of claims 1 to 4, wherein the pipe (231) is configured as a flat pipe.

6. The thermal protection component (23) according to any one of claims 1 to 5, wherein at least one reinforcing rib (2311) is provided in the interior of the pipe (231) and extends along an axial direction of the pipe (231), the interior of the pipe (231) is separated by the reinforcing rib (2311) to form at least two flow channels (2312) arranged to be spaced apart along a radial direction of the pipe (231).

7. The thermal protection component (23) according to any one of claims 1 to 6, wherein the pipe (231) is configured as a flexible pipe.

8. The thermal protection component (23) according to any one of claims 1-7, wherein the pipe (231) is made of plastic material.

9. The thermal protection component (23) according to any one of claims 1 to 8, wherein the pipe (231) and the joint (232) is in an interference fit.

10. The thermal protection component (23) according to any one of claims 1 to 9, wherein the pipe (231) and the joint (232) are laser welded and fixed to each other.

11. A battery (2) comprising:
the thermal protection component (23) according to any one of claims 1-10; and
a battery cell (211), with the thermal protection component (23) disposed above the battery cell (211), wherein the thermal protection component (23) is used to adjust a temperature of the battery cell (211) and to be fused so the cooling medium is sprayed at a fire point when there is an open flame in the battery cell (211).

12. An electric apparatus comprising the battery (2) of claim 11 for supplying electrical energy.

## Patentansprüche

1. Wärmeschutzkomponente (23) für eine Batterie (2), umfassend:
ein Rohr (231), das mit einem Strömungskanal (2312) versehen ist, damit ein Kühlmedium in seinem Inneren strömen kann; und
ein Verbindungsstück (232), das an einer Innenwand davon mit einem Einrastelement versehen ist,
wobei das Einrastelement mit einer Vielzahl von Einrastenden versehen ist, ein Ende des Rohrs (231) in das Verbindungsstück (232) eingesetzt ist, sich jedes Einrastende bis in das Innere des Rohrs (231) erstreckt und ein Teil einer Rohrwand des Rohrs (231) zwischen die Einrastenden und die Innenwand des Verbindungsstücks (232) eingesetzt ist;
wobei das Einrastelement eine Vielzahl von Klauen (2324) umfasst, die entlang einer Umfangsrichtung des Verbindungsstücks (232) beabstandet angeordnet sind, wobei ein Ende jeder Klaue (2324) mit der Innenwand des Verbindungsstücks (232) verbunden ist und das andere Ende jeder Klaue (2324) von der Innenwand des Verbindungsstücks (232) vorsteht, um das Einrastende zu bilden;
wobei das Verbindungsstück (232) ein erstes Ende (2321) und ein zweites Ende (2322) aufweist, wobei eine Stufenfläche (2323) an der Innenwand des Verbindungsstücks (232) zu dem ersten Ende (2321) hin ausgebildet ist, das erste Ende (2321) des Verbindungsstücks (232) offen ist, das Ende des Rohrs (231) von dem ersten Ende (2321) des Verbindungsstücks (232) aus in ein Inneres des Verbindungsstücks (232) eingesetzt ist und eine Endfläche des Endes des Rohrs (231) an der Stufenfläche (2323) anliegt;
wobei eine Vielzahl von Erhebungen (2325) auf der Stufenfläche (2323) beabstandet angeordnet sind.

2. Wärmeschutzkomponente (23) nach Anspruch 1, wobei ein Ende jeder Klaue (2324) mit der Innenwand des Verbindungsstücks (232) zwischen der Stufenfläche (2323) und dem zweiten Ende (2322) verbunden ist, das andere Ende jeder Klaue (2324) von der Stufenfläche (2323) vorsteht, um das Einrastende zu bilden, und das Einrastende der Innenwand des Verbindungsstücks (232) zwischen der Stufenfläche (2323) und dem ersten Ende (2321) entspricht.

3. Wärmeschutzkomponente (23) nach Anspruch 1, wobei eine der Erhebungen (2325) auf der Stufenfläche (2323) an einer Position zwischen jeder Klaue (2324) und der Innenwand des Verbindungsstücks (232) vorgesehen ist.

4. Wärmeschutzkomponente (23) nach Anspruch 1, wobei das Verbindungsstück (232) mit mindestens einem Anschlussabschnitt (2326) versehen ist, der an dem zweiten Ende (2322) des Verbindungsstücks (232) mit dem Inneren des Verbindungsstücks (232) in Verbindung steht oder an einer Seitenwand des Verbindungsstücks (232) zwischen dem ersten Ende (2321) und dem zweiten Ende (2322) mit dem Inneren des Verbindungsstücks (232) in Verbindung steht.

5. Wärmeschutzkomponente (23) nach einem der Ansprüche 1 bis 4, wobei das Rohr (231) als ein Flachrohr ausgebildet ist.

6. Wärmeschutzkomponente (23) nach einem der Ansprüche 1 bis 5, wobei mindestens eine Verstärkungsrippe (2311) im Inneren des Rohrs (231) vorgesehen ist und sich entlang einer axialen Richtung des Rohrs (231) erstreckt, wobei das Innere des Rohrs (231) durch die Verstärkungsrippe (2311) getrennt ist, um mindestens zwei Strömungskanäle (2312) zu bilden, die entlang einer radialen Richtung des Rohrs (231) beabstandet angeordnet sind.

7. Wärmeschutzkomponente (23) nach einem der Ansprüche 1 bis 6, wobei das Rohr (231) als ein flexibles Rohr ausgebildet ist.

8. Wärmeschutzkomponente (23) nach einem der Ansprüche 1 bis 7, wobei das Rohr (231) aus einem Kunststoffmaterial hergestellt ist.

9. Wärmeschutzkomponente (23) nach einem der Ansprüche 1 bis 8, wobei das Rohr (231) und das Verbindungsstück (232) einen Presssitz bilden.

10. Wärmeschutzkomponente (23) nach einem der Ansprüche 1 bis 9, wobei das Rohr (231) und das Verbindungsstück (232) miteinander lasergeschweißt und aneinander befestigt sind.

11. Batterie (2), umfassend:
die Wärmeschutzkomponente (23) nach einem der Ansprüche 1 bis 10; und
eine Batteriezelle (211), wobei die Wärmeschutzkomponente (23) oberhalb der Batteriezelle (211) angeordnet ist, wobei die Wärmeschutzkomponente (23) dazu verwendet wird, eine Temperatur der Batteriezelle (211) einzustellen und aufgeschmolzen zu werden, sodass das Kühlmedium an einer Brandstelle versprüht wird, wenn eine offene Flamme in der Batteriezelle (211) vorhanden ist.

12. Elektrische Vorrichtung, umfassend die Batterie (2) nach Anspruch 11 zum Liefern von elektrischer Energie.

## Revendications

1. Composant de protection thermique (23) pour une batterie (2), comprenant :
un tuyau (231) pourvu d'un canal d'écoulement (2312) permettant à un fluide de refroidissement de s'écouler dans son intérieur ; et
un raccord (232) pourvu d'un élément d'encliquetage sur une paroi intérieure de celui-ci,
dans lequel l'élément d'encliquetage est pourvu d'une pluralité d'extrémités d'encliquetage, une extrémité du tuyau (231) est insérée dans le raccord (232), chaque extrémité d'encliquetage s'étend jusqu'à l'intérieur du tuyau (231), et une partie d'une paroi du tuyau (231) est insérée entre les extrémités d'encliquetage et la paroi intérieure du raccord (232) ;
dans lequel l'élément d'encliquetage comprend une pluralité de griffes (2324) agencées de manière espacée le long d'une direction périphérique du raccord (232), une extrémité de chaque griffe (2324) étant reliée à la paroi intérieure du raccord (232), et l'autre extrémité de chaque griffe (2324) faisant saillie depuis la paroi intérieure du raccord (232) pour former l'extrémité d'encliquetage ;
dans lequel le raccord (232) présente une première extrémité (2321) et une seconde extrémité (2322), une surface d'épaulement (2323) étant formée sur la paroi intérieure du raccord (232) vers la première extrémité (2321), la première extrémité (2321) du raccord (232) étant ouverte, l'extrémité du tuyau (231) étant insérée dans un intérieur du raccord (232) depuis la première extrémité (2321) du raccord (232), et une surface d'extrémité de l'extrémité du tuyau (231) venant en butée contre la surface d'épaulement (2323) ;
dans lequel une pluralité de bosses (2325) sont espacées sur la surface d'épaulement (2323).

2. Composant de protection thermique (23) selon la revendication 1, dans lequel une extrémité de chaque griffe (2324) est reliée à la paroi intérieure du raccord (232) entre la surface d'épaulement (2323) et la seconde extrémité (2322), l'autre extrémité de chaque griffe (2324) fait saillie depuis la surface d'épaulement (2323) pour former l'extrémité d'encliquetage, et l'extrémité d'encliquetage correspond à la paroi intérieure du raccord (232) entre la surface d'épaulement (2323) et la première extrémité (2321).

3. Composant de protection thermique (23) selon la revendication 1, dans lequel l'une des bosses (2325) est prévue sur la surface d'épaulement (2323) à une position entre chaque griffe (2324) et la paroi intérieure du raccord (232).

4. Composant de protection thermique (23) selon la revendication 1, dans lequel le raccord (232) est pourvu d'au moins une portion de raccordement (2326) communiquant avec l'intérieur du raccord (232) au niveau de la seconde extrémité (2322) du raccord (232), ou communiquant avec l'intérieur du raccord (232) au niveau d'une paroi latérale du raccord (232) entre la première extrémité (2321) et la seconde extrémité (2322).

5. Composant de protection thermique (23) selon l'une quelconque des revendications 1 à 4, dans lequel le tuyau (231) se présente sous la forme d'un tuyau plat.

6. Composant de protection thermique (23) selon l'une quelconque des revendications 1 à 5, dans lequel au moins une nervure de renfort (2311) est prévue à l'intérieur du tuyau (231) et s'étend le long d'une direction axiale du tuyau (231), l'intérieur du tuyau (231) étant séparé par la nervure de renfort (2311) pour former au moins deux canaux d'écoulement (2312) agencés de manière espacée le long d'une direction radiale du tuyau (231).

7. Composant de protection thermique (23) selon l'une quelconque des revendications 1 à 6, dans lequel le tuyau (231) se présente sous la forme d'un tuyau flexible.

8. Composant de protection thermique (23) selon l'une quelconque des revendications 1 à 7, dans lequel le tuyau (231) est réalisé en un matériau plastique.

9. Composant de protection thermique (23) selon l'une quelconque des revendications 1 à 8, dans lequel le tuyau (231) et le raccord (232) sont en ajustement serré.

10. Composant de protection thermique (23) selon l'une quelconque des revendications 1 à 9, dans lequel le tuyau (231) et le raccord (232) sont soudés au laser et fixés l'un à l'autre.

11. Batterie (2) comprenant :
le composant de protection thermique (23) selon l'une quelconque des revendications 1 à 10 ; et
une cellule de batterie (211), le composant de protection thermique (23) étant disposé au-dessus de la cellule de batterie (211), dans laquelle le composant de protection thermique (23) est utilisé pour ajuster une température de la cellule de batterie (211) et pour être fondu de sorte que le fluide de refroidissement soit pulvérisé au niveau d'un point d'incendie lorsqu'une flamme nue est présente dans la cellule de batterie (211).

12. Appareil électrique comprenant la batterie (2) selon la revendication 11 pour fournir de l'énergie électrique.
